## Europäisches Patentamt

(19) **European Patent Office**

**Office européen des brevets**

(11) Publication number: **0 101 478**
**B1**

(12) # EUROPEAN PATENT SPECIFICATION

(45) Date of publication of patent specification: **13.05.87**

(51) Int. Cl.⁴: **G 01 N 27/40, G 01 N 27/46**

(21) Application number: **83900716.8**

(22) Date of filing: **18.02.83**

(86) International application number:
**PCT/FI83/00015**

(87) International publication number:
**WO 83/03005 01.09.83 Gazette 83/20**

(54) **PROCEDURE FOR ACCOMPLISHING LIQUID CONTACT AT SLOW LIQUID FLOW.**

(30) Priority: **18.02.82 FI 820541**

(43) Date of publication of application:
**29.02.84 Bulletin 84/09**

(45) Publication of the grant of the patent:
**13.05.87 Bulletin 87/20**

(84) Designated Contracting States:
**DE FR GB**

(56) References cited:
**CH-A- 520 928**
**DE-A-2 459 466**
**DE-B-2 141 841**
**DE-B-2 605 149**
**GB-A-1 274 349**
**GB-A-1 337 829**

**The file contains technical information
submitted after the application was filed and
not included in this specification**

(73) Proprietor: **KONE OY**
**Munkkiniemen Puistotie 25**
**SF-00330 Helsinki 33 (FI)**

(72) Inventor: **JOHANSSON, Henrik**
**Joupinmäki 3 D 74**
**SF-02760 Espoo 76 (FI)**

(74) Representative: **Bjellman, Lennart Olov Henrik
et al
DR. LUDWIG BRANN PATENTBYRÅ AB
Drottninggatan 7 Box 1344
S-751 43 Uppsala (SE)**

## Description

The present invention concerns a procedure for accomplishing liquid contact at slow liquid flow for such measurement wherein is measured the potential difference between two liquids, one of these (the known liquid) being located in a reference channel and the other (the liquid to be measured) being located in the sample fluid channel.

From GB—A—1 274 349 and GB—A—1 337 829 it is previously known to use fibrous substances, for instance PTFE containing glass fibre for establishing contact between two liquids. Furthermore, DE—A—26 05 149 discloses the use of "moistened" PTFE in a liquid-liquid bridge.

An ion-selective analyser is used to measure from liquids, for instance from blood, various matter contents such as potassium, sodium or calcium. The measurement is based on the potential difference between a so-called reference electrode and an electrode sensitive to the substance to be determined, potassium for instance. The electrode in the reference channel has been inserted in a solution with known composition and of which solution part is conducted to join the liquid under measurement in order to obtain a closed electrical circuit (=liquid contact). The problem connected with the conduction of reference solution into the liquid under measurement has commonly been that the flow rate of the reference solution has been difficult to adjust. Using an excessive solution quantity is expensive and causes inconvenience, and if too little of the solution is used, the result may be that the continuity between the reference solution and the liquid under measurement is lost. It is furthermore necessary to prevent the liquid under measurement from entering the reference channel. If any of the liquid under measurement gains access to the reference channel, the composition of the solution in this channel will change and at the same time the potential difference between the reference electrode and the other electrodes changes, thus causing an erroneous result of measurement.

In analysers of prior art, the reference channel of the measuring cell has been manufactured e.g. by grinding two pieces conically together and leaving the ground surfaces just sufficiently rough to allow reference solution to seep through between the surfaces to become admixed with the liquid under measurement. The drawback of such a procedure is that it is expensive, and the drawback of the measuring cell is its large size. This makes for a large distance between the reference channel and the measuring channels with the result that the quantity of liquid under measurement must also be large. If one aims to minimize the quantity of the liquid under measurement, or of the sample, the sample channel has to be made to have a small diameter. This, again, results in numerous drawbacks, among them the risk of obstruction and the air bubble risk. An air bubble in a small channel may interrupt the electrical continuity, whereby of course an incorrect result of measurement is incurred.

In another procedure of prior art, the junction between the reference channel and the sample liquid channel is prepared of sintered glass powder. The drawback of this procedure and cell is still its large size with the attendant detriments already reported above. It has been exceedingly difficult to affix a small piece of glass sinter in the reference channel. Furthermore, glass has the property that it is slowly soiled down for instance by the sample, which is blood in most instances.

The object of the present invention is to eliminate the drawbacks mentioned and to provide a procedure by which it is possible to manufacture economical, reliable and small reference electrodes for the measuring cells of ion-selective analysers. The procedure of the invention is characterized by the features of claim 1. The advantage of the procedure is its ease and speed of application. Moreover, plastic granulate in inexpensive and only a minimal quantity of it is needed for each reference channel. Teflon is inherently liquid-repellent and therefore the risks of contamination and obstruction are low. Furthermore, Teflon® structures assume fibrous shape on being pressed, and hereby gaps are produced through which the reference solution runs into the sample fluid.

The procedure according to an advantageous embodiment of the invention is characterized in that the granulate is kept moistened during the pressing step.

The invention also relates to a measuring cell in accordance with claim 4.

The invention is described in the following with the aid of an example, with reference made to the attached drawings, wherein:—

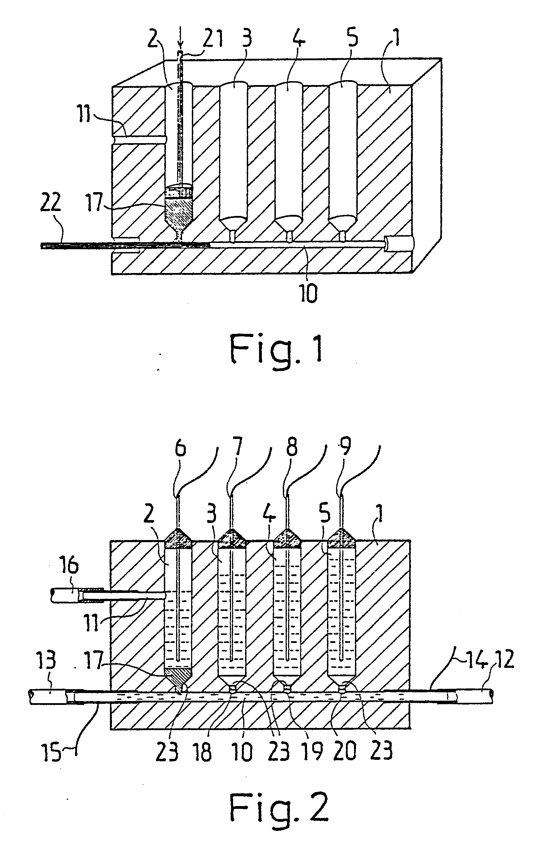

Fig. 1 illustrates the pressing of Teflon sinter into the reference channel, the measuring cell being longitudinally sectioned, and

Fig. 2 presents the longitudinal section of a finished measuring cell.

The measuring cell may be manufactured e.g. of acrylic plastic. In the body component 1 is provided a channel for the reference solution and for the reference electrode 6. This channel is called the reference channel 2. Likewise, in the body component are provided measuring channels 3, 4 and 5 for electrodes 7, 8 and 9, by the aid of which different matter contents are measured, for instance sodium, potassium and calcium. The channels 2 through 5 are most simply produced by drilling. Furthermore, in the cell are drilled the sample liquid channel 10 and the reference solution entrance channel 11. The sample liquid channel 10 communicates with the channels 2—5 through a funnel-shaped reducing portion 23. Similarly, the reference solution entrance channel 11 communicates with the reference channel 2. In the reducing portions of the measuring channels 3—5 is established, by pouring, an ion-selective membrane 18, 19 and 20 known in itself in the art, which is sensitive to a given substance, for instance specifically to sodium, potassium and calcium, separately to each of them. Furthermore, the measuring channels are fitted with electrodes 7 through 9. The Teflon granulate standing by in the reducing portion 23 of the reference channel 2 is placed in a tool 21 by means of which the granulate 17 is pressed into the reducing portion 23 of the reference channel 2. In the sample liquid channel 10 has been inserted a counterpiece 22 against which the Teflon granulate is pressed. On pressing e.g. by means of a hydraulic press, the granulate is "sintered", in which connection the Teflon granules are transformed to be fibrous. The reference liquid may flow in the interstices between the fibres thus formed. The pressing force may be used towards adjusting the granulate plus to permit a given flow rate. The flow rate may also be adjusted by varying the thickness of the Teflon layer. The pressing is done in moistened condition, whereby liquid remains between the Teflon fibres. Hereby the capillary force acting between the fibres will maintain a slight leakage in the pressed Teflon mass.

It is obvious to a person skilled in the art that the invention is not confined solely to the example above presented and that on the contrary different embodiments of the invention may vary within the scope of the claims.

## Claims

1. Method for establishing liquid contact between two liquids, one of which is flowing at a slow rate relative to the other, for a measurement in which the potential difference between the two liquids is measured, one of these, the known liquid, being located in a reference channel (2) and the other, the liquid under measurement, being located in a sample liquid channel (10), characterized in that a hydrophobic granulous substance (17) is pressed between the reference channel (2) and the sample liquid channel (10), the hydrophobic granulous substance (17) assuming a fibrous character on pressing to form a fibrous connection, the two liquids being admitted to their respective channels (2, 10) thereafter.

2. Method according to claim 1, characterized in that the hydrophobic granulous substance (17) consists of polytetrafluoroethylene granulate.

3. Method according to claim 1 or 2, characterized in that the hydrophobic granulous substance is kept moistened during the pressing step.

4. Measuring cell comprising a sample liquid channel (10), measuring channels (3—5) connected thereto for each substance to be measured, and a reference channel (2), characterized in that between the reference channel (2) and the sample liquid channel (10) there is a fibrous connection made by the method of claim 1.

## Patentansprüche

1. Verfahren zur Herstellung eines Flüssigkeitskontaktes zwischen zwei Flüssigkeiten, von denen eine relativ zur anderen langsam fließt, zum Messen einer Potentialdifferenz zwischen den beiden Flüssigkeiten, wobei sich die bekannte der Flüssigkeiten in einem Vergleichskanal (2) und die zu messende Flüssigkeit in einem Flüssigkeitsprüfkanal (10) befindet, dadurch gekennzeichnet, daß eine hydrophobe körnige Substanz (17) zwischen den Vergleichskanal (2) und den Flüssigkeitsprüfkanal (10) eingepreßt wird, wobei die hydrophobe körnige Substanz (17) während des Pressens einen faserigen Charakter annimmt und eine faserige Verbindung bildet, und daß anschließend die beiden Flüssigkeiten ihren jeweiligen Kanälen (2, 10) zugeführt werden.

2. Verfahren nach Anspruch 1, dadurch gekennzeichnet, daß die hydrophobe körnige Substanz (17) aus Polytetrafluoroäthylengranulat besteht.

3. Verfahren nach Anspruch 1 oder 2, dadurch gekennzeichnet, daß die hydrophobe körnige Substanz während des Pressens feucht gehalten wird.

4. Meßzelle enthaltend einen Flüssigkeitsprüfkanal (10) mit Meßkanälen (3 bis 5) für jede zu messende Substanz und einen Vergleichskanal (2), dadurch gekennzeichnet, daß zwischen dem Vergleichskanal (2) und dem Flüssigkeitsprüfkanal (10) sich eine faserige Verbindung befindet, die nach dem Verfahren gemäß Anspruch 1 hergestellt ist.

## Revendications

1. Procédé permettant d'établir un contact liquide entre deux liquides, dont l'un s'écoule à un faible débit par rapport à l'autre, pour mesurer l'écart de potentiel entre les deux liquides, l'un de ceux-ci, le liquide connu, se trouvant dans un canalicule de référence (2) et l'autre, le liquide soumis à la mesure, se trouvant dans un canalicule (10) de liquide d'échantillon, caractérisé en ce que l'on comprime une substance granuleuse hydrophobe (17) entre le canalicule de référence (2) et le canalicule de liquide d'échantillon (10), la substance granuleuse hydrophobe (17) prenant un caractère fibreux lors de la compression pour former une liaison fibreuse, après quoi les deux liquides sont admis dans leurs canalicules respectifs (2, 10).

2. Procédé selon la revendication 1, caractérisé en ce que la substance granuleuse hydrophobe (17) est constituée par des granulés de polytétrafluoro-éthylène.

3. Procédé selon la revendication 1 ou 2, caractérisé en ce que la substance granuleuse hydrophobe est maintenue à l'état humide pendant l'étape de compression.

4. Cellule de mesure comprenant un canalicule du liquide d'échantillon (10), des canalicules de mesure (3—5) reliés à celui-ci pour chaque substance à mesurer, et un canalicule de référence (2) caractérisé en ce qu'entre le canalicule de référence (2) et le canalicule de liquide d'échantillon (10) une liaison fibreuse est réalisée par le procédé selon la revendication 1.

Fig. 1

Fig. 2